# EUROPEAN PATENT APPLICATION

(11) **EP 3 225 965 A1**
(43) Date of publication of application: **04.10.2017**
(21) Application number: 17163665.7
(22) Date of filing: 29.03.2017
(51) Int. Cl.: G01M 1/10, G01M 1/12

(54) **A MEASUREMENT DEVICE**

(30) Priority: 29.03.2016 TR 201604047
(71) Applicant: Tusas-Türk Havacilik Ve Uzay Sanayii A.S., 06980 Ankara (TR)
(72) Inventor: SEZGIN, Hale, 06980 Ankara (TR)
(74) Representative: Cayli, Hülya

(57) **Abstract**

A measurement device comprising at least one drive unit on which one apparatus (A) is placed, on which, in turn, a moving part to be measured in terms of its center of gravity and moment of inertia is fixed, such that the moving part is enabled to make rotational and/or oscillating motion, characterized in that it comprises an apparatus (A) comprising a base (A1); a body (A2); a coupling surface (A3) having a structure in compliance with that of the table to be positioned on the drive unit; a first centering pin (A4) disposed on the coupling surface (A3) so that it is suitably received by a hole provided in the center of the table when it is placed on the drive unit; a first coupling element (B1) enabling the placement of the moving part on the body (A2) and being suitable for coupling to the moving part such that the moving part is prevented from moving independently from itself and a second coupling element (B2) disposed on another side against the side on which the first coupling element (B1) is disposed, enabling to place the moving part on the body (A2) in a stable manner and being suitable for coupling to the moving part such that the moving part is prevented from moving independently from itself.

## Description

### Technical Field

The present invention relates to a measurement device for testing some aircraft components in particular such as an aileron for measuring the values thereof such as the center of gravity and moment of inertia.

### Prior Art

Since aircraft are such vehicles that move high above the ground while carrying living beings, they have to pass certain tests before they are put into service. In order to approve an aircraft as eligible to fly, one of the tests to be passed is the vibration analysis. In a vibration analysis, the moment of inertia (rotational inertia) of the moving parts of an aircraft like ailerons is measured. In order to measure the moment of inertia, first the center of gravity of the respective part which generally has a nonuniform geometry has to be determined.

According to the prior art, the patent document CN104330211A discloses a measuring tool for measuring the center of balance and moment of inertia of an aileron. Said tool comprises a measuring platform, a screw to which one end of a part to be tested is fastened, a spring to which one end of the screw is connected, a positioning device that can be moved right- and leftward and up- and downward, and a hinge joint to which the other end of an aileron is connected and positioned on the other end of the measuring platform. Said tool, however, does not allow an aileron to make a rotational movement and therefore the inertia to which an aileron is exposed due to rotational movements generated on an aircraft wing during flight can not be measured properly in a realistic manner, and the fastening parts such as spring and hinge joint comprised in the measuring tool prevent the execution of an accurate measurement.

### Brief Description of Invention

The present invention provides a measurement device for measuring the values of a moving part such as the center of gravity and moment of inertia thereof, comprising at least one apparatus (A) to which said moving part is coupled and at least one drive unit on which said apparatus (A) is suitably placed and which comprises at least one table suitable to be placed on said apparatus such that its center coincides with the center of the apparatus and capable of rotating around an axis that passes through its center; at least one driving mechanism like a motor providing the rotation motion; at least one transmission rod transmitting the motion of the driving mechanism to the table by means of at least one air bearing reducing the friction of air; at least one brake slowing down /stopping the motion of the table; at least one vibration source providing the vibrational motion of the moving part for measuring the moment of inertia; at least one chronometer; at least one momentum fixation member having at least one end coupled to said air bearing; at least one momentum stabilization member measuring the overturning moment from the center of gravity according to the offset of the center of gravity, and at least one display showing the measured momentum and/or time, characterized in that said apparatus comprises at least one base; at least one body on which a moving part to be measured is placed and which itself is disposed on said base; at least one coupling surface disposed on the side of the body facing the drive unit such that it is placed on said drive unit, and having a structure in compliance with that of the table; at least one first centering pin disposed on the coupling surface so that it is suitably received by a hole provided in the center of the table when it is placed on the drive unit; at least one first coupling element disposed on one side of the body and enabling the placement of the moving part on the body, having at least one end that is coupled to the body and at least another end suitable for coupling to the moving part such that the moving part is prevented from moving independently from itself; and at least one second coupling element disposed on another side against the side on which the first coupling element is disposed, enabling to place the moving part on the body in a stable manner and having at least one end coupled to the body and at least another end coupled to the moving part such that the moving part is prevented from moving independently from itself.

With the measurement device developed according to the present invention, measurement of parameters such as the moment of inertia and center of gravity of moving aircraft parts like an aileron is made so accurately that any unwanted motion of that edge of the tested part which is coupled to the measurement device is prevented during measurement.

### Object of Invention

The object of the present invention is to develop a measurement device enabling the measurement of the parameters like moment of inertia and center of gravity of moving aircraft parts such as an aileron.

Another object of the present invention is to develop a measurement device enabling the placement of a part to be measured thereon in a stable manner.

A further object of the present invention is to develop a measurement device with which friction forces generated during measurement are reduced.

Still a further object of the present invention is to develop a measurement device enabling an accurate measurement to be made by preventing any unwanted movement of that edge of the measured part which is coupled to the measurement device during measurement.

Yet another object of the present invention is to develop a measurement device making fast and correct measurements and not affected by environmental factors.

### Description of Figures

Illustrative embodiments of a measurement device developed according to the present invention are illustrated in the accompanying figures briefly described below.
Figure 1 is a perspective view from below of an apparatus comprised in the measurement device according to the present invention.
Figure 2 is a front view of the apparatus.
Figure 3 is a perspective view of a part of the apparatus.

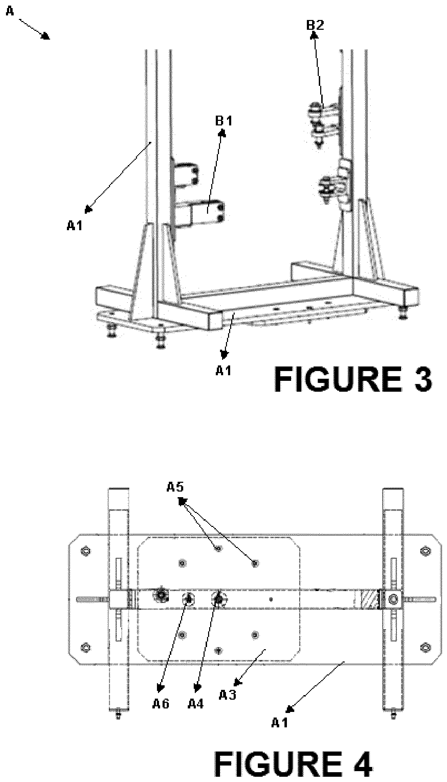

Figure 3 is a view from below of the apparatus.

The parts in the figures are individually designated as following.

| Apparatus | (A) |
|---|---|
| Base | (A1) |
| Body | (A2) |
| Coupling surface | (A3) |
| First centering pin | (A4) |
| Fixation pin | (A5) |
| Second centering pin | (A6) |
| First coupling element | (B1) |
| Second coupling element | (B2) |

### Description of Invention

The components of an aircraft have to pass certain tests before the respective aircraft is put into service. In this context, vibration analyses are made to see the influences of vibrations generated during flight on the moving parts of an aircraft. In a vibration analysis, the center of gravity of a moving part, which may be the wing of an aircraft, is determined and thereafter its moment of inertia is calculated. The present invention particularly relates to a measurement device for measuring the center of weight and moment of inertia of an aileron.

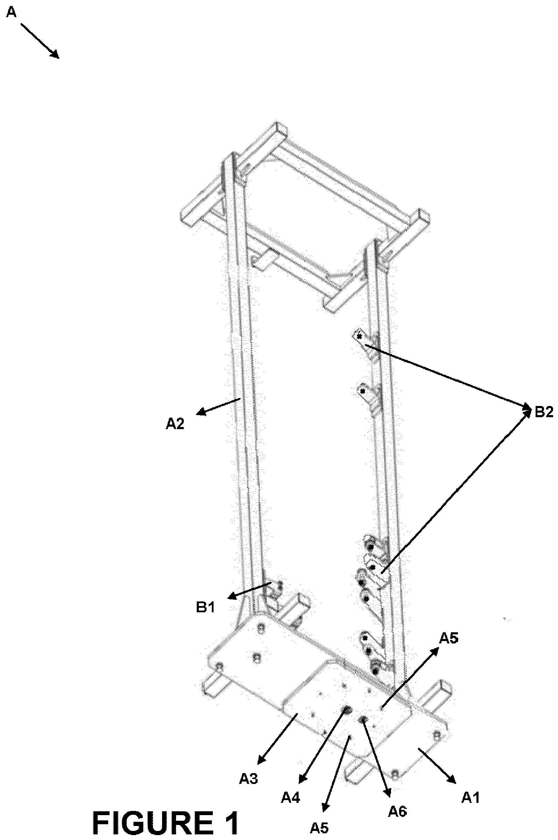

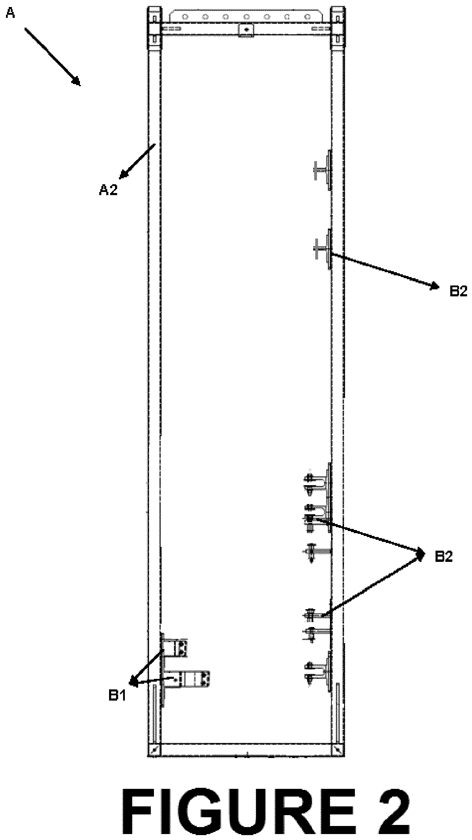

A measurement device according to the present invention, as illustrated in figures 1-4, comprises at least one drive unit (not illustrated) on which at least one apparatus (A) is placed, on which, in turn, is placed a moving part, such as an aileron, to be measured in terms of its center of gravity and moment of inertia, such that the moving part is enabled to make rotational and/or oscillating motion. Said drive unit comprises at least one table placed on said apparatus (A) such that its center coincides with the center of the apparatus (A) and capable of rotating around an axis that passes through its center; at least one driving mechanism like a motor providing the rotation motion; at least one transmission rod transmitting the motion of the driving mechanism to the table by means of at least one air bearing (i.e. roller bearing) reducing the friction of air; at least one brake slowing down /stopping the motion of the table; at least one vibration source providing the vibrational (oscillating) motion of the moving part for measuring the moment of inertia; at least one chronometer; at least one momentum fixation member having at least one end coupled to said air bearing and at least another end coupled preferably to at least one second air bearing; at least one momentum stabilization member measuring the overturning moment from the center of gravity according to the offset of the center of gravity, and at least one display showing the measured momentum and/or time. The apparatus (A) comprised in the measurement device according to the present invention comprises at least one base (A1); at least one body (A2) preferably in the form of a frame, on which the moving part to be measured is placed and which itself is disposed on said base (A1); at least one coupling surface (A3) disposed on the side of the body (A2) facing the drive unit such that the apparatus (A) is placed on said drive unit, and having a structure in compliance with that of the table; at least one first centering pin (A4) preferably with a conic shape, disposed on the coupling surface (A3) so that it is suitably received by a hole provided in the center of the table when the apparatus (A) is placed on the drive unit; at least one first coupling element (B1) disposed on one side of the body which is preferably perpendicular to the ground and enabling the placement of the moving part on the body (A2) and having at least one end that is coupled to the body (A2) and at least another end suitable for coupling to the moving part such that the moving part is prevented from moving independently from the apparatus (A); and at least one second coupling element (B2) disposed on another side, which is preferably vertical to the ground, against the side on which the first coupling element (B1) is disposed, enabling to place the moving part on the body (A2) in a stable manner and having at least one end coupled to the body (A2) and at least another end coupled to the moving part such that the moving part is prevented from moving independently from the apparatus (A). In an embodiment wherein said centering pin (A4) has a conical shape, the first centering pin (A4) is prevented from damaging and straining the hole in the center of the table as the first centering pin (A4) is placed therein.

In an exemplary embodiment of the present invention, the driving mechanism comprised in the drive unit transmits the rotational motion to the table by means of the transmission rod. By virtue of carrying out the transmission by means of an air bearing, the table can rotate around an axis that passes through its center so that the influence of friction is reduced. By virtue of the brake comprised in the drive unit, the rotational speed of the table can be changed or the table can be stopped to change its direction of rotation. Thus, a moving part can be brought into oscillation motion particularly to measure the moment of inertia of that part. The drive unit comprises the vibration source to initiate the oscillating motion such that the table is brought into vibration (i.e. oscillation) under the influence of the vibration source. In order to position the moving part on the apparatus (A), it is coupled to the first coupling element (B1) and to the second coupling element (B2). The first coupling element (B1) prevents the connection between the apparatus (A) and the moving part from becoming resilient due to the weight of the moving part and thus helps the moving part in keeping its right position. The second coupling element (B2), in turn, prevents any unwanted rotational motion of the moving part in relation to the apparatus (A) which it can make during measurement. By virtue of coupling the moving part to the apparatus (A) by means of the first coupling element (B1) and the second coupling element (B2) from two mutual sides thereof, the moving part is made to move synchronously with the apparatus (A) and any possible unwanted movements such as oscillation and vibration of the moving part independent from the movements of the apparatus (A) are prevented. In addition, the position of the axes of the moving part through which it is coupled to the apparatus (A) are kept correct throughout the test. Thus, any calculation errors are avoided which may occur during the measurements of the center of gravity and moment of inertia.

In a preferred embodiment according to the present invention, the measurement device comprises at least one spherical air bearing and at least one cylindrical air bearing in connection with the spherical air bearing. According to this embodiment, the transmission rod transmitting the motion of the motor to the table extends to the table through the cylindrical air bearing and the spherical air bearing. Thus, the influence of air friction possibly to occur on the transmission rod during rotation is minimized.

In another preferred embodiment according to the present invention, the first coupling element (B1) comprises at least two flanges (not illustrated) between which one edge of the moving part is placed. According to this embodiment, the measurement device comprises at least one fastening means which may be a screw, wherein the fastening means move the two flanges so that they become close to each other such that the respective edge of the moving part is tightened between the flanges. Thus, any independent movement of the moving part from the apparatus (A) is prevented and a stable coupling is provided.

In an alternative embodiment according to the present invention, the measurement device comprises on the body (A2), or on a side of the body (A2), preferably on one edge of the body (A2) a first coupling element (B1), and on another part of the body (A2) that is against the first coupling element (B1), e.g. against said edge of the body (A2), three second coupling elements (B2). Thus, when a moving part (e.g. an external aileron or an internal aileron) to be measured is placed on the measurement device, it is positioned thereon by means of the first coupling element (B1) from one edge of the apparatus (A) which is preferably perpendicular to the ground, and by means of the second coupling elements (B2) from the top, the center and the bottom part of another edge which is preferably perpendicular to the ground. By virtue of this coupling fashion, the moving part is forced to make the motion only (i.e. full cycle rotation for measuring the center of gravity and oscillating motion for measuring the moment of inertia) which is required to carry out the test and it is prevented from making any other motion which may influence the test results.

In another preferred embodiment according to the present invention, the measurement device comprises two first coupling elements (B1) disposed one under the other on one edge. According to this embodiment, when the measurement device is used for an internal aileron for instance, it is coupled to the first coupling element (B1) which is relatively far from the ground, and when it is used for an external aileron, it is coupled to the first coupling element (B1) which is close to the ground. Thus, the same measurement device can be used for moving parts of different sizes.

In another preferred embodiment according to the present invention, the measurement device comprises a degree-based scale on the table. By virtue of said scale, it can be measured how many degrees the table and therefore the moving part coupled to the apparatus (A) are rotated.

In another preferred embodiment according to the present invention, the measurement device comprises at least one second centering pin (A6) disposed on the coupling surface (A3), enabling to secure the apparatus (A) onto the drive unit and being suitable for insertion into at least one hole on the table. Thus, when the apparatus (A) is placed on the drive unit, it is both secured at a desired position and prevented from rotating around the first centering pin (A4) during measurement. In a preferred embodiment according to the present invention, said first centering pin (A4) and the second centering pin (A6) are positioned side by side on the coupling surface (A3) in a plane passing through the longitudinal cross-section of the moving part when the moving part is placed on the apparatus (A). According to this embodiment, the first centering pin (A4) is aligned with a hole provided in the center of the table and the second centering pin (A6) is aligned with one of the holes provided at a distance to the center of the table, preferably so as to form a circle.

In another alternative embodiment according to the present invention, the measurement device comprises at least one fixation pin (A5) on the coupling surface (A3), which can suitably be received by at least one hole in the table and takes a position so as to be in the same alignment with said hole when the apparatus (A) is placed on the table. In another preferred embodiment according to the present invention, the measurement device comprises at least three fixations pins (A5) on one side, and at least three fixation pins (A5) on the other side of the line on which the first centering pin (A4) and the second centering pin (A6) are positioned. In a preferred embodiment, said fixation pins (A5) are positioned so as to form a circle around the first centering pin (A4). Thus, the apparatus (A) is forced to make the same movement with the drive unit such that the momentum and the center of gravity of the moving part can be measured more accurately.

Thus, a measurement device is developed according to the present invention, on which a moving aircraft part such as an aileron is placed in a stable manner and by which the measurements for moment of inertia and center of gravity are performed in an accurate manner.

## Claims

1. A measurement device for measuring the values of a moving part such as the center of gravity and moment of inertia thereof, comprising at least one apparatus (A) to which said moving part is coupled and at least one drive unit, on which said apparatus (A) is suitably placed and which comprises
• at least one table suitable to be placed on said apparatus (A) such that its center coincides with the center of the apparatus (A) and capable of rotating around an axis that passes through its center;
• at least one driving mechanism like a motor, providing the rotation motion;
• at least one transmission rod transmitting the motion of the driving mechanism to the table by means of at least one air bearing reducing the friction of air;
• at least one brake slowing down /stopping the motion of the table;
• at least one vibration source providing the vibrational motion of the moving part for measuring the moment of inertia;
• at least one chronometer;
• at least one momentum fixation member having at least one end coupled to said air bearing;
• at least one momentum stabilization member measuring the overturning moment from the center of gravity according to the offset of the center of gravity and
• at least one display showing the measured momentum and/or time,
**characterized in that** said apparatus (A) comprises
- at least one base (A1);
- at least one body (A2) on which the moving part to be measured is placed and which itself is disposed on said base (A1);
- at least one coupling surface (A3) disposed on the side of the body (A2) facing the drive unit such that it is placed on said drive unit, and having a structure in compliance with that of the table;
- at least one first centering pin (A4) disposed on the coupling surface (A3) so that it is suitably received by a hole provided in the center of the table when it is placed on the drive unit;
- at least one first coupling element (B1) disposed on one side of the body (A2) and enabling the placement of the moving part on the body (A2) and having at least one end that is coupled to the body (A2) and at least another end suitable for coupling to the moving part such that the moving part is prevented from moving independently from itself; and
- at least one second coupling element (B2) disposed on another side against the side on which the first coupling element (B1) is disposed, enabling to place the moving part on the body (A2) in a stable manner and having at least one end coupled to the body (A2) and at least another end coupled to the moving part such that the moving part is prevented from moving independently from itself.

2. The measurement device according to claim 1, **characterized in that** at least one other end of the moment fixation member is in connection with at least one second air bearing.

3. The measurement device according to claim 1, **characterized in that** the body (A2) is in the form of a frame.

4. The measurement device according to claim 1 or 3, **characterized in that** the first coupling element (B1) is disposed on one edge of the body (A2) which is perpendicular to the ground.

5. The measurement device according to claim 1 or 3, **characterized in that** the second coupling element (B2) is disposed on another edge of the body (A2) which is perpendicular to the ground.

6. The measurement device according to claim 1, **characterized by** comprising at least one spherical air bearing and at least one cylindrical air bearing in connection with the spherical air bearing.

7. The measurement device according to claim 1, **characterized in that** the first coupling element (B1) comprises at least two flanges between which one edge of the moving part is placed.

8. The measurement device according to claim 7, **characterized by** comprising at least one fastening means moving the two flanges so that they become close to each other such that the respective edge of the moving part is tightened between the flanges.

9. The measurement device according to claim 1, **characterized by** comprising on the body (A2) or on one side of the body (A2) a first coupling element (B1) and three second coupling elements (B2) on another part of the body (A2) against the first coupling element (B2).

10. The measurement device according to claim 1, **characterized by** comprising on one edge of the body (A2) two first coupling elements (B1) disposed one under the other.

11. The measurement device according to claim 1, **characterized by** comprising at least one second centering pin (A6) disposed on the coupling surface (A3), enabling to secure the apparatus (A) onto the drive unit and being suitable for insertion into at least one hole on the table.

12. The measurement device according to claim 11, **characterized in that** the first centering pin (A4) and the second centering pin (A6) are positioned side by side on the coupling surface (A3) in a plane passing through the longitudinal cross-section of the moving part when the moving part is placed on the apparatus (A).

13. The measurement device according to claim 12, **characterized in that** the first centering pin (A4) is aligned with one hole on the center of the table and the second centering pin (A6) is aligned with one of the holes disposed at a certain distance to the center of the table.

14. The measurement device according to claim 1, **characterized by** comprising at least one fixation pin (A5) on the coupling surface (A3), which can suitably be received by at least one hole in the table and takes a position so as to be in the same alignment with said hole when the apparatus (A) is placed on the table.

15. The measurement device according to claim 1 or 11, **characterized by** comprising at least three fixations pins (A5) on one side, and at least three fixation pins (A5) on the other side of a line on which the first centering pin (A4) and the second centering pin (A6) are positioned.
